**Europäisches Patentamt**

**European Patent Office**

**Office européen des brevets**

(11) Publication number: **0 166 459**
**B1**

# EUROPEAN PATENT SPECIFICATION

(45) Date of publication of patent specification: **13.09.89**

(51) Int. Cl.⁴: **B 65 G 47/08**

(21) Application number: **85108075.4**

(22) Date of filing: **28.06.85**

(54) **A method and apparatus for collecting articles successively fed on a conveyor into at least two groups separated by a gap.**

(30) Priority: **29.06.84 JP 136409/84**

(43) Date of publication of application:
**02.01.86 Bulletin 86/01**

(45) Publication of the grant of the patent:
**13.09.89 Bulletin 89/37**

(84) Designated Contracting States:
**BE CH DE FR GB IT LI NL SE**

(56) References cited:
**GB-A-1 055 611**
**US-A-3 775 938**
**US-A-3 923 144**

(73) Proprietor: **AB TETRA PAK**
**Box 61**
**S-221 00 Lund (SE)**

(72) Inventor: **Kimura, Yoshio**
**Seiwa Corp. 202, 306, Chidori 1-chome**
**Ota-ku Tokyo (JP)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

## Description

The invention relates to a method and an apparatus for forming separate groups of articles from a sequence of articles fed successively along a conveyor in a single file, and has the purpose of simultaneously forming at least two groups of articles separated from each other by a gap.

The invention is preferably applicable for the handling of rectangular shaped articles such as paper or cardboard containers of rectangular shape, for example containing milk or juice or the like. Such containers are individually and successively fed from a filling or labeling station along a conveyor, usually at a regular interval, and before packing a plurality of such containers into a box it is necessary to arrange the containers into groups which are then pushed onto a receiving platform or storage pallet for subsequent treatment, such as packaging.

From US-A-3 923 144 there has been known a method an apparatus for collecting successively delivered articles into groups. The articles fed in a single file along a first conveyor are transferred to a second conveyor which has a plurality of parallel guide rails and is driven for intermittent movement transverseley of the first conveyor. Rows of articles lined up along the guide rails of the second conveyor are pushed by a steped reciprocating pusher parallel to the first conveyor onto a receiving platform. Articles forming a stepped configuration of rows corresponding to the steps of the pusher have to be preset in the guide rails of the second conveyor before starting the operation. In this known apparatus one group of mutually abutting articles, for example four rows of three articles each, is formed on the receiving platform with each stroke of the pusher.

GB-A-1 055 611 describes a method and apparatus for forming groups of articles fed in a single file along a conveyor, wherein contiguous rows of articles are pushed transversely from the conveyor by repeated strokes of a first pusher, until a required number of rows has been accumulated, which is then pushed by a stroke of a second pusher on the receiving platform to form a group thereon.

In both the aforementioned prior art methods it is not possible to form simultaneously two or more groups of articles on the receiving platform which are separated from each other by gaps.

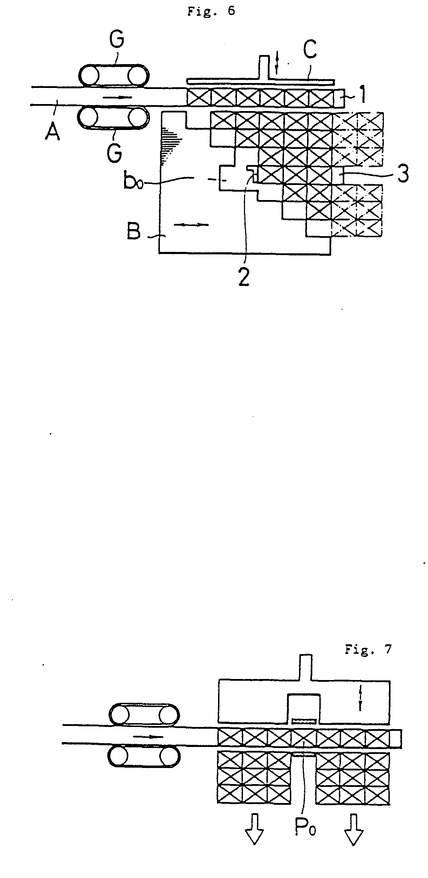

For forming at least two groups of articles, a method such as illustrated in fig. 7 might be used. In fig. 7, a contiguous row of articles accumulated and intercepted on the conveyor is pushed out laterally, with one of the articles being intercepted and not pushed out. By repeating this operation three times, two groups of nine articles each are formed. However, for conveying these groups of articles to further treatment, the conveying direction would be parallel to that of the conveyor, which usually does not correspond to the lay-out of existing treatment and packaging devices. It is often desirable to take out the collected groups of articles in a direction parallel to the conveyor.

Also, as the conveyor is usually continuously driven, it will exert a certain pressure on the intercepted row of articles, whilst this is pushed in the lateral direction, whereby the intercepted article PO might become squeezed or tilted during the pushing operation, with resulting danger that the rows of articles might become disarranged.

Another alternative would be to branch the conveyor into two or three branches and arrange a conventional group forming device at the end of each of the branches. This would result in a rather complicated structure.

It is an object of the invention to avoid the aforementioned problems and to provide a simple and reliable method and apparatus for collecting successively fed articles into at least two separate groups of articles.

This object is solved by the method and apparatus according to the invention which are defined in the appended claims.

Preferred embodiments of the invention are described hereinafter with reference to the drawings.

Fig. 1 is a schematic plan view of the device according to one embodiment of the invention for forming two groups of articles.

Fig. 2 is an enlarged plan view of the pusher used in the embodiment of fig. 1.

Fig. 3 (a)-(h) are plan views of the device illustrating the various stages of operation.

Fig. 4 is a schematic plan view of a device according to another embodiment of the invention.

Fig. 5 is a plan view illustrating the operation of the embodiment of fig. 4.

Fig. 6 is a plan view of still another embodiment of the invention.

Fig. 7 is a plan view of an alternative device.

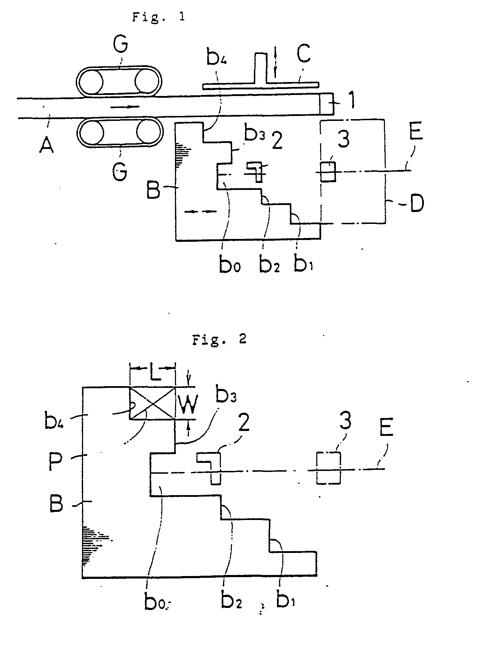

Fig. 1 illustrates a whole device for collecting commodities into groups so that two groups of commodities may be juxtaposed at right and left with a space corresponding to one commodity therebetween.

A conveyor A is continuously driven in the direction of the arrow in fig. 1 for conveying commodities. A pusher B is disposed slidably in a lengthwise direction parallel to the conveyor A and can be reciprocated in the transverse direction. A pusher C is disposed at the opposite side with respect to the pusher B with the conveyor A therebetween.

The pusher B has, as detailed in fig. 2, a stepwise tapered shape in which a plurality of steps each having a longitudinal and transverse size corresponding to the length L and corresponding width W of the commodities P are formed for receiving commodities P in each of the steps b1-b4, except for a recess or omitted portion b0 being formed by omission of the third step in the third row as seen from the inside of the plurality of the steps. Preferably, each of the stages b1-b4 is slightly larger than the rectangular commodity P, whereby the commodities P will be fully entered, and further the situation will be avoided that the pusher B catches a commodity P and breaks the row in an assembling operation of the commodities.

On an extension line E of the omitted portion b0 along the track of the pusher B, a stopper 2 of inverted L-shape having a same width as the width W of the commodity P is provided in alignment with the second stage b2 for preventing a commodity P from being pushed into the omitted portion b0. Further along the line E towards the front end of the pusher B a square stopper 3 having a same width as the width W of the commodity P is provided having its rear end surface transversely aligned with the front end surface of the pusher B.

A pusher C is operable to traverse over the conveyor A and advance toward the pusher B and upon each stroke will push a set of commodities conveyed by the conveyor A into the stepped pusher B. The pusher C has a length along conveyor A corresponding to the number of commodities to be handled as a set, and in fig. 1 it has a length corresponding to four commodities. Further, the pusher C functions as a kind of a guide during the actuation of the pusher B for preventing lateral movement of the commodities when actuating the pusher B. A stopper 1 is provided just at the end of the conveyor A. The commodities put on and forwarded by the conveyor A are intercepted by the stopper 1 to be collected as a set.

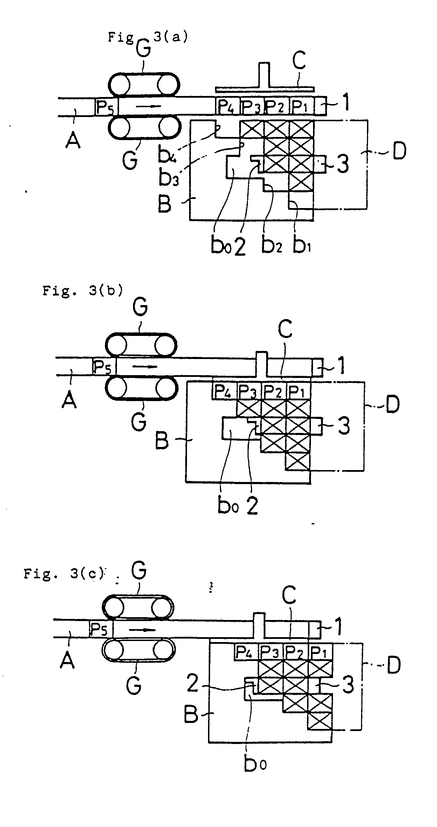

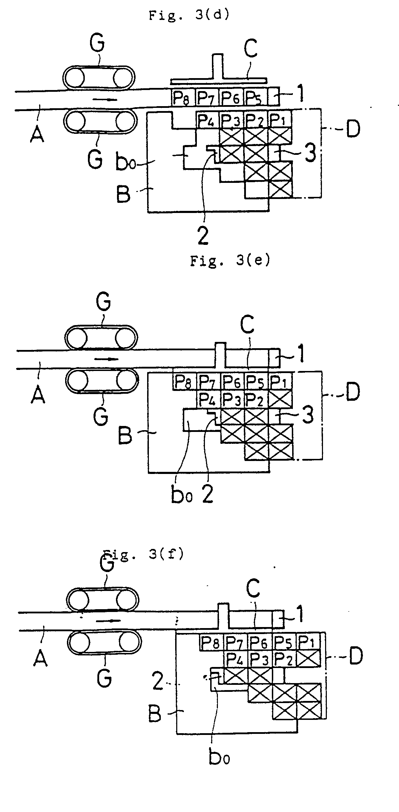

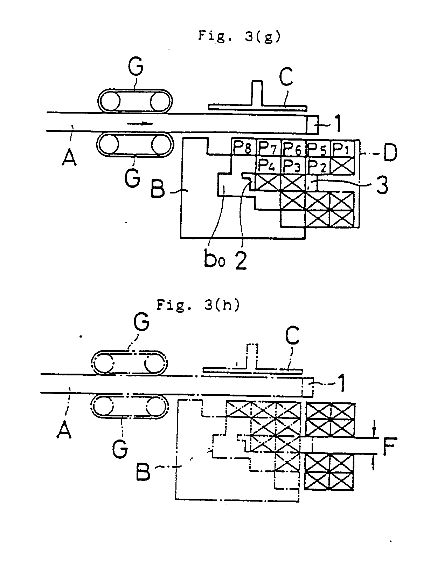

In fig. 2, a pair of right and left vertical belts G is arranged along the running direction of the conveyor A. Both vertical belts G are intermittently driven and stopped. By this operation, a predetermined number of the commodities which are being randomly conveyed are supplied towards the pusher C, and the succeeding commodities (e.g. commodities after P4 in fig. 3(a)-(c) can be intercepted at the belts G. D indicates a receiving platform or storage pallet provided just before the pusher B.

In the device in fig. 1, when the mechanisms are actuated in appropriate order as shown in fig. 3(a)-(g) two groups of commodities, each including longitudinally two, laterally two and totally four commodities, are collected at right and left with a space corresponding to one commodity therebetween. The details of this operation will be described hereinafter with reference to fig. 3(a) to (g).

With the method according to the invention, commodities can be separated and collected into groups, each including for example longitudinally two, laterally two and totally four commodities as shown in fig. 3 (a) (g). At first, as shown in fig. 3 (a), eight commodities are preset as follows, with the end surface of the commodities at the left end being aligned with the end surface of the pusher B. Four commodities are preset in lateral alignment with the foremost step b1 of the pusher B, three are preset in lateral alignment with the next step b2 and one is preset besides the step b3 just after the omitted portion b0. Generally, the number of the commodities aligned with each step before the omitted portion b0 is decreased by one for each step towards the rear portion of the pusher B. The number of the commodities preset in the stage b3 just after the omitted portion b0 is the difference between the number of the commodities set in the step b2 just before the omitted portion b0 and the number of the commodities engagable in the omitted portion b0. In the steps thereafter, the number is reduced one by one similarly as the steps before the omitted portion b0. In this case, commodities are not placed in the steps b1-b4 proper of the pusher B, so that the steps themselves are kept empty.

The conveyor A is driven to randomly convey the commodities. The foremost commodity P1 is received by the stopper 1 provided just before the conveyor A. The following three commodities P2-P4 are stopped adjacent to the rear of the commodity P1 to form a set of commodities along the pusher C.

At the instant that the commodities P1-P4 have accumulated at the side of the pusher C, the pusher C operates, as shown in fig. 3(b), to push the lengthwise contiguous four commodities P1-P4 into the pusher B with keeping the row, so that the commodity P4 at the rear end is pushed into the rear end step b4 and the commodities P3-P1 are set in successively more forward positions. Further, by this movement of the commodities P3-P1, each of the commodities preset ahead of the pusher B is fed in the transverse direction by a distance corresponding to the width of one commodity. Thus, the commodities are so received in the empty portions at the steps that the commodity at the right end of the first row is received in the foremost step b1 of the pusher B and the commodity at the right end of the second row is received in the second step b2. As the stopper 2 is disposed just before the omitted portion b0, no commodity does enter into the omitted portion b0, as shown in fig. 3(b).

In this instant, when the pusher B is advanced by a distance corresponding to the length L of a commodity, as shown in fig. 3(c), the foremost row of commodities, including the commodity P1 is pushed onto the platform D. However, since the stopper 3 is provided on the extension line of the omitted portion E along the track of the pusher B, the commodities arranged along the extension line E of the omitted portion b0 are intercepted by the stopper 3 and are not pushed out. Therefore, as shown in fig. 3(d), two groups of commodities are collected at the right and left sides with the stopper 3 therebetween.

When the pusher C makes a retreat as shown in fig. 3(d), further commodities P5 to P8 following P4 are fed alongside the pusher C. When the pusher C is again actuated immediately after feeding of the commodity P8, the commodities P5-P8 are pushed sideways similarly as the last operation for P1-P4. Thus, the commodities P5, P6 and P7 are pushed to the positions adjacent to the commodity P2 at the left end of the foremost transverse row, the commodity P3 at the left end of the second row and the commodity P4 at the left end of the third row, respectively. The commodity P8 at the rear end is pushed into the empty step b4 at the rear end of the pusher B. Further, in accordance with the movement of the commodities P5-P7, each of the commodities waiting in front of the pusher B are moved in the transverse direction and are thereby positioned in the empty portions of the steps in such a way that the commodity at the right end of the first row is fed into the foremost step b1 of the pusher B and the commodity at the right end of the second row is fed into the second step b2 of the pusher B.

When the pusher B is advanced again as shown in fig. 3(f) the four commodities including P2 and P5 in the foremost row of the pusher B, except for those in line with the stopper 3, are pushed onto the storage platform D similarly as the preceding operation and are abutted against the rear sides of the commodities pushed out by the preceding stroke, as shown in fig. 3(g). Therefore, the commodities are accumulated into separated groups each including longitudinally two and laterally two commodities and collected at the right and left sides with the stopper therebetween along a lateral line.

By the repetition of this operation, the commodities can be collected efficiently.

When the pusher C in the condition in fig. 3(g) is again actuated to push four commodities into the pusher B, and the pusher B is again actuated, two groups of the commodities, each including longitudinally three, laterally two and totally six commodities, are collected at the right and the left with the space corresponding to one commodity therebetween. The number of strokes of the pushers C and B can be adequately changed, so that the number of the commodities aligned longitudinally can be easily changed without changing the number of the commodities laterally aligned. Thus, the collecting number and the collecting pattern can be easily changed.

By arranging that the storage platform D moves slightly forward from the position of (g) in fig. 3 to form a slight space between the collected commodities and the commodities at the foremost row in the pusher B any risk may be avoided that the pushing of the commodities by the pusher C into the pusher B may be interfered.

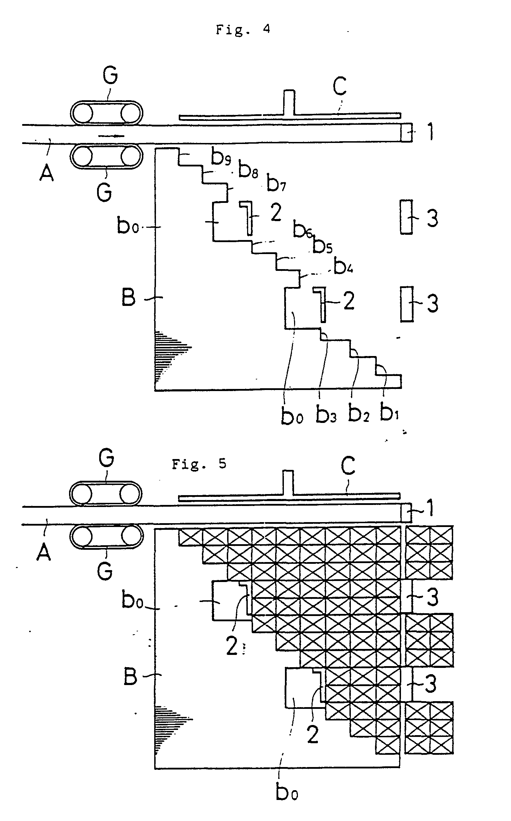

Fig. 4 illustrates a device for collecting the commodities into three groups each including longitudinally three, laterally two and totally six commodities along a lateral line with spaces corresponding to two commodities. In this case, steps b1-b3, b4-b6 and b7-b9 are contiguous respectively, and two omitted portions b0 having substantially same width as that of two commodities are formed between each group of three steps. On the extension lines E of the two omitted portions bO along the track of a pusher B, stoppers 2 having inverted L-shape and a width of twice the width W of a commodity P are provided in alignment with the third step b3 and the sixth step b6, respectively. Further ahead, square stoppers 3 each having a width of twice the width W of a commodity P are provided with the rear end surfaces thereof aligned with the front end surface of the pusher B along a transverse line. The pusher C has a width corresponding to the total length of nine commodities P.

By the use of this device, for example as shown in fig. 5, the commodities are collected into three groups each including longitudinally three, laterally two and totally six commodities with spaces corresponding to two commodities therebetween. The number of strokes of the pushers B and C can be increased to collect the commodities into separate groups, in which the number of the longitudinal aligned commodities is changed without changing the number of the laterally aligned commodities.

In these cases, the collected commodities can be taken out parallel to the running direction of the conveyor A, which is advantageous with respect to installation space as well as arrangement and disposition, i.e., layout, of a series of devices including a packaging process.

Fig. 6 illustrates an embodiment for collecting two groups of commodities, each including longitudinally two, laterally three and totally six commodities, with a gap corresponding to one commodity. In this case, the pusher C and the pusher B operate two times to collect two sets of the commodities, each set of which includes longitudinally two, laterally three and totally six commodities, at right and left with a space corresponding to one commodity therebetween. In comparision with a conventional case which requires a pusher C to operate three times, the operation time of the pusher C can be reduced by one time. In this case, the collected commodities can be taken out parallel to the running direction of the conveyor A as similarly as above case, and thus, aforementioned advantages can be obtained in many cases.

Many modifications of the embodiments are possible within the scope of the claims. The pusher B may be modified so that the width of said omitted portion b0 and the stoppers 2 and 3 may be twice as large as that of the commodity analogous to fig. 4.

Generally it is possible to easily change the collected number and collected pattern as well as the space (width F in fig. 3(h)) between the groups by adequately changing the sizes of the pusher C, the number of the commodities pushed thereby, the number of the steps of the pusher B, the sizes of the omitted portions and the sizes of the stoppers 2 and 3.

As clearly shown in fig. 2 it is preferable that the omitted or recessed portion b0 has a width which is larger than the width W of the commodities. This may be achieved by correspondingly reducing the width of the adjacent step b2. This avoids interference of the edge of step b2 with the commodities disposed along the extension line E of the omitted portion b0 and intercepted by the stopper 3.

## Claims

1. A method of forming separate groups of articles from a sequence of articles fed successively along a conveyor in a single file, comprising the steps of:

a) Presetting a plurality of articles (P) at the side of said conveyor (A) in front of a pusher (B) having a stepwise tapered configuration formed by a number of progressively more advanced steps (b1 to b7) each having a width and length substantially corresponding to that of an article, the contiguous sequence of steps being interrupted at least once by an omitted portion (b0) receding behind the line of steps and having a width corresponding substantially to the width of at least one step, said articles being preset in an arrangement of side by side rows, each row being aligned with a respective step (b1 to b7) or omitted portion (b0) of the pusher (B) and said arrangement forming a stepwise tapered configuration corresponding to that of the pusher (B) and facing the pusher (B) by a distance substantially corresponding to the length of one article;

b) intercepting the articles conveyed on the conveyor (A) to accumulate a contiguous row of articles (P1 to P7) thereon;

c) pushing the accumulated row of articles transversely from the conveyor over a distance sufficient to move the row of articles into contact with the preset arrangement of articles and then to displace the whole arrangement until it abuts the pusher (B);

d) advancing the pusher (B) in the length direction of the conveyor (A) by a stroke length corresponding to the length (L) of an article for pushing the foremost articles of the rows aligned with the steps onto a receiving surface (D), but intercepting the row of articles aligned with an omitted portion (b0) from being moved;

e) withdrawing the pusher (B) by said stroke length and

f) repeating the steps b) to e) until a desired number of articles has been collected on the receiving surface (D) in groups separated by at least one gap aligned with an omitted portion (b0).

2. An apparatus for performing the method as claimed in claim 1, comprising a conveyor (A) for successively conveying articles in a single file;

a stop (1) at the end of the conveyor (A) for intercepting the articles to form a contiguous row thereof;

a stepwise tapered pusher (B) located at one side of the conveyor (A) and being reciprocatable in a direction parallel to the conveyor (A) and having a plurality of contiguous steps (b1 to b7) each having substantially the same length and width as that of the said articles, the contiguous sequence of steps being interrupted by at least one omitted or recessed portion (b0) which recedes behind the line of steps;

a further pusher (C) located at the opposite side of the conveyor (A) from said pusher (B) and being reciprocatable transversely over the conveyor (A) for pushing with each stroke a contiguous row of articles from the conveyor (A) towards the pusher (B);

a first stopper (2) and a second stopper (3) both located in front of and aligned with the omitted portion (b0) along the line (E) of movement of the pusher (B), the first stopper (2) having an abutment face facing the further pusher (C) and being positioned for intercepting articles from being pushed into the space immediately in front of the omitted portion (b0),

and the second stopper (3) being spaced from the omitted portion (b0) by a distance so as to intercept the far end of a row of articles formed behind the first pusher (2) and aligned with the omitted portion (b0) along the line of movement (E) of the pusher (B).

**Patentansprüche**

1. Verfahren zum Bilden getrennter Gruppen von Gegenständen aus einer Folge von Gegenständen, die nacheinander entlang eines Förderers in einer einzigen Reihe zugeführt werden mit den Schritten:

a) Vorordnen einer Vielzahl von Gegenständen (P) an der Seite des Förderers (A) vor einem Schieber (B), der einen stufenweisen verjüngten Aufbau hat, der durch eine Anzahl von allmählich weiter vorgerückten Stufen (b1 bis b7) gebildet wird, die alle eine Breite und Länge haben, die im wesentlichen mit der eines Gegenstandes übereinstimmen, wobei die angrenzende Folge von Stufen zumindest einmal durch einen weggelassenen Bereich (b0) unterbrochen wird, der hinter die Stufenlinie zurücktritt und eine Breite hat, die im wesentlichen der Breite von zumindest einer Stufe entspricht, wobei die Gegenstände in einer Anordnung von Seite an Seite stehenden Reihen vorgeordnet werden, jede Reihe mit einer jeweiligen Stufe (b1 bis b7) oder einem weggelassenen Bereich (b0) des Schiebers (B) ausgerichtet wird und die Anordnung einen stufenweise verjüngten Aufbau bildet, der dem des Schiebers (B) entspricht und dem Schieber (B) entgegengerichtet ist in einem Abstand, der im wesentlichen mit der Länge eines Gegenstandes übereinstimmt;

b) Aufhalten der Gegenstände, die auf dem Förderer (A) befördert werden, um eine angrenzende Reihe von Gegenständen (P1 bis P7) darauf anzusammeln;

c) Schieben der angesammelten Reihe von Gegenständen quer von dem Förderer über eine Strecke, die ausreichend ist, um die Reihe von Gegenständen in Berührung mit der vorgeordneten Anordnung von Gegenständen zu bringen und dann die gesamte Anordnung zu verschieben, bis sie an den Schieber (B) anstößt;

d) Vorschieben des Schiebers (B) in Längsrichtung des Föderers (A) um eine Stoßlänge, die der Länge (L) eines Gegenstandes entspricht, um die vordersten Gegenstände der Reihen, die mit den Stufen ausgerichtet sind, auf eine Aufnahmefläche (D) zu schieben, aber die Reihe von Gegenständen, die mit einem weggelassenen Bereich (b0) ausgerichtet sind daran zu hindern, bewegt zu werden;

e) Zurückziehen des Schiebers (B) um die Stoßlänge und

f) Wiederholen der Schritte b) bis e) bis eine gewünschte Anzahl von Gegenständen auf der Aufnahmefläche (D) in Gruppen angesammelt worden sind, die durch zumindest eine Spalte, die mit einem weggelassenen Bereich (b0) ausgerichtet ist, getrennt sind.

2. Vorrichtung zur Durchführung des Verfahrens nach Anspruch 1, mit einem Förderer (A) für nacheinander beförderte Gegenstände in einer einzigen Reihe;

mit einem Anschlag (1) am Ende des Förderers (A) zum Aufhalten der Gegenstände, um aus diesen eine angrenzende Reihe zu bilden;

mit einem schrittweise verjüngten Schieber (B), der an einer Seite des Förderers (A) angeordnet ist und in einer Richtung parallel zum Förderer (A) hin- und herbewegbar ist und eine Vielzahl von angrenzenden Stufen (bl bis b7) hat, die alle im wesentlichen die gleiche Länge und Breite wie die der Gegenstände haben, wobei die angrenzende Folge von Stufen durch zumindest einen weggelassenen oder ausgesparten Bereich (b0) unterbrochen ist, welcher hinter die Stufenlinie zurücktritt;

mit einem weiteren Schieber (C), der von Schieber (B) aus auf der gegenüberliegenden Seite des Förderers (A) angeordnet ist und quer über den Förderer (A) hin- und herbewegbar ist, um mit jedem Stoß eine angrenzende Reihe von Gegenständen von dem Förderer (A) gegen den Schieber (B) zu schieben;

mit einem ersten Stopper (2) und einem zweiten Stopper (3), die beide vor und ausgerichtet mit dem weggelassenen Bereich (b0) entlang der Linie (E) der Bewegung des Schiebers (B) angeordnet sind, wobei der erste Stopper (2) eine Anschlagfläche hat, die dem weiteren Schieber (C) entgegengerichtet ist und angeordnet ist, um die Gegenstände daran zu hindern, in den Raum direkt vor dem weggelassenen Bereich (b0) geschoben zu werden,

und wobei der zweite Stopper (3) von dem weggelassenen Bereich (b0) um eine Strecke beabstandet ist, so daß er das entfernte Ende einer Reihe von Gegenständen, die hinter dem ersten Schieber (2) gebildet wird aufhält und mit dem weggelassenen Bereich (b0) entlang der Bewegungslinie (E) des Schiebers (B) ausgerichtet ist.

## Revendications

1. Procédé pour former des groupes séparés d'articles à partir d'une suite d'articles avancés les uns à la suite des autres le long d'un transporteur en une file unique, comprenant les étapes qui consistent:

a) à positionner de façon préalable plusieurs articles (P) sur le côté dudit transporteur (A) en avant d'un poussoir (B) ayant une configuration effilée en gradins formée d'un certain nombre de gradins (b1 à b7) progressivement plus avancés, ayant chacun une largeur et une longueur correspondant sensiblement à celles d'un article, la suite contiguë de gradins étant interrompue au moins une fois par une partie enlevée (b0) venant en retrait en arrière de la ligne de gradins et ayant une largeur correspondant sensiblement à la largeur d'au moins un gradin, lesdits articles étant positionnés préalablement suivant un agencement de rangées côte à côte, chaque rangée étant alignée avec un gradin respectif (b1 à b7) ou une partie enlevée (b0) du poussoir (B) et ledit agencement formant une configuration effilée en gradins correspondant à celle du poussoir (B) et faisant face au poussoir B d'une distance correspondant sensiblement à la longueur d'un article;

b) à intercepter les articles transportés sur le transporteur (A) pour accumuler sur celui-ci une rangée contiguë d'articles (P1 à P7);

c) à pousser la rangée accumulée d'articles transversalement à partir du transporteur sur une distance suffisante pour amener la rangée d'articles en contact avec l'agencement préalablement établi d'articles, puis pour déplacer l'ensemble de l'agencement jusqu'à ce qu'il vienne en butée contre le poussoir (B);

d) à faire avancer le poussoir (B) dans la direction longitudinale du transporteur (A) sur une longueur de course correspondant à la longueur (L) d'un article afin de pousser les articles situés le plus en avant des rangées alignées avec les gradins jusque sur une surface (D) de réception, mais d'intercepter la rangée d'articles alignés avec une partie enlevée (b0) afin qu'elle ne soit pas déplacée;

e) à rétracter le poussoir (B) de ladite longueur de course; et

f) à répéter les étapes b) à e) jusqu'à ce qu'un nombre souhaité d'articles ait été collecté sur la surface (D) de réception en groupes séparés par au moins un intervalle aligné avec une partie enlevée (b0).

2. Appareil pour la mise en oeuvre du procédé selon la revendication 1, comprenant un transporteur (A) destiné à transporter des articles en une file unique, les uns à la suite des autres;

une butée (1) à l'extrémité du transporteur (A) pour intercepter les articles afin d'en former une rangée contiguë;

un poussoir (B) effilé en gradins situé sur un premier côté du transporteur (A) et pouvant être animé d'un mouvement alternatif dans une direction parallèle au transporteur (A), et comportant plusieurs gradins contigus (b1 à b7) ayant chacun sensiblement la même longueur et la même largeur que celles desdits articles, la suite contiguë de gradins étant interrompue par au moins une partie enlevée ou évidée (b0) qui vient en retrait en arrière de la ligne de gradins;

un autre poussoir (C) placé sur le côté opposé du transporteur (A) par rapport audit poussoir (B) et pouvant être animé d'un mouvement alternatif, transversalement au-dessus du transporteur (A), pour pousser à chaque course une rangée contiguë d'articles à partir du transporteur (A) vers le poussoir (B);

un premier élément d'arrêt (2) et un second élément d'arrêt (3) tous deux placés en avant de et en alignement avec la partie enlevée (b0) le long de la ligne (E) du mouvement du poussoir (B), le premier élément d'arrêt (2) ayant une face de butée tournée vers l'autre poussoir (C) et étant disposé de façon à intercepter des articles pour qu'ils ne soient pas poussés dans l'espace situé immédiatement en avant de la partie enlevée (b0);

et le second élément d'arrêt (3) étant espacé de la partie enlevée (b0) d'une distance telle qu'il intercepte l'extrémité éloignée d'une rangée d'articles formée en arrière du premier poussoir (2) et alignée avec la partie enlevée (b0) le long de la ligne de mouvement (E) du poussoir (B).

Fig. 1

Fig. 2

Fig. 3(a)

Fig. 3(b)

Fig. 3(c)

2

Fig. 3(d)

Fig. 3(e)

Fig. 3(f)

Fig. 3(g)

Fig. 3(h)

Fig. 4

Fig. 5

Fig. 6

Fig. 7